(19) Europäisches Patentamt
European Patent Office
Office européen des brevets

(11) **EP 3 687 865 B1**

(12) **EUROPÄISCHE PATENTSCHRIFT**

(45) Veröffentlichungstag und Bekanntmachung des Hinweises auf die Patenterteilung:
**11.05.2022  Patentblatt 2022/19**

(21) Anmeldenummer: **18780036.2**

(22) Anmeldetag: **19.09.2018**

(51) Internationale Patentklassifikation (IPC):
***B60R 21/0136*** (2006.01)

(52) Gemeinsame Patentklassifikation (CPC):
**B60R 21/0136**

(86) Internationale Anmeldenummer:
**PCT/EP2018/075322**

(87) Internationale Veröffentlichungsnummer:
**WO 2019/063381 (04.04.2019 Gazette 2019/14)**

(54) **VERFAHREN ZUR ERZEUGUNG EINES AUSLÖSESIGNALS ZUM AUSLÖSEN MINDESTENS EINER SICHERHEITSFUNKTION EINES KRAFTFAHRZEUGS**

METHOD FOR GENERATING A TRIGGER SIGNAL FOR TRIGGERING AT LEAST ONE SAFETY FUNCTION OF A MOTOR VEHICLE

PROCÉDÉ POUR GÉNÉRER UN SIGNAL DE DÉCLENCHEMENT POUR DÉCLENCHER AU MOINS UNE FONCTION DE SÉCURITÉ D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2017  DE 102017217013**

(43) Veröffentlichungstag der Anmeldung:
**05.08.2020  Patentblatt 2020/32**

(73) Patentinhaber: **Robert Bosch GmbH**
**70442 Stuttgart (DE)**

(72) Erfinder:
• **KOENIG, Simon**
**70839 Stuttgart (DE)**
• **LANG, Gunther**
**70563 Stuttgart (DE)**

(56) Entgegenhaltungen:
DE-A1- 10 309 081          DE-A1-102004 012 550
DE-A1-102012 210 233      DE-A1-102013 202 205
DE-A1-102014 113 739      DE-A1-102014 208 649
DE-A1-102015 226 752      US-A1- 2013 079 995
US-A1- 2015 291 122

EP 3 687 865 B1

**Beschreibung**

Stand der Technik

Zur Detektion eines Fußgängeraufpralls auf eine Vorderseite eines Kraftfahrzeugs werden seit einigen Jahren Druckschlauchsensoren (PTS = Pressure Tube Sensor) eingesetzt. Der Druckschlauch befindet sich dabei üblicherweise zwischen einem Stoßfängerquerträger und einem davor liegenden Absorptionsschaum. Der Druckschlauch ist mit Luft gefüllt und an seinen Enden mit jeweils einem Drucksensor abgeschlossen. Die bei einem Fußgängeraufprall auftretende Deformation des Schaums führt somit zu einer Kompression des Schlauches, wodurch ein Drucksignal von den beiden Drucksensoren gemessen wird. Dieses wird von einem Steuergerät, i.d.R. dem zentralen Airbagsteuergerät, eingelesen und dort verarbeitet, um einen Fußgängeraufprall zu detektieren.
Aus der DE 103 09 081 A1 ist eine Vorrichtung zur Ansteuerung von Rückhaltemitteln in einem Fahrzeug bekannt. Aus der US 2013/079995 A1 ist ein Aufpralldetektionssystem bekannt.

Offenbarung der Erfindung

Hier wird ein besonders vorteilhaftes Verfahren zur Erzeugung eines Auslösesignals zum Auslösen mindestens einer Sicherheitsfunktion eines Kraftfahrzeugs vorgestellt. Die abhängigen Ansprüche geben besonders vorteilhafte Weiterbildungen des Verfahrens an.
Mit dem beschriebenen Verfahren kann insbesondere die Erfassung von Kollisionen mit Fußgängern verbessert werden. So kann insbesondere eine Mindestgröße eines Kollisionsobjektes bestimmt und/oder eine Kollisionsgeschwindigkeit verifiziert werden. Das kann insbesondere für eine verbesserte Fußgängerschutzerkennung und Auslösung von Sicherheitsfunktionen wie beispielsweise Rückhaltemitteln genutzt werden. Die Bestimmung der Mindestgröße des Kollisionsobjekts kann insbesondere eine wesentlich genauere Trennung zwischen meist kleinen Nichtauslöseobjekten für den Fußgängerschutz und deutlich größeren Auslöseobjekten (wie beispielsweise sogenannten Bein-Impaktoren) ermöglichen.
Für das beschriebene Verfahren sind mindestens zwei Druckschlauchsensoren vorgesehen. Auf Basis dieser Sensoren kann insbesondere die Größe eines Kollisionsobjektes ermittelt werden. Bisher war nur die Erkennung der Masse aus dem Drucksignal eines Druckschlauchsensors möglich. Durch (mindestens) einen weiteren Druckschlauchsensor wird die Detektion für den Fußgängerschutz um eine räumliche Komponente ergänzt. Außerdem kann durch den (mindestens einen) weiteren Druckschlauchsensor eine Ermittlung der Eigengeschwindigkeit des Kraftfahrzeugs bei der Kollision ermöglicht werden.
Für das beschriebene Verfahren wird vorzugsweise ein System mit zwei Druckschlauchsensoren (also ein 2-PTS-System) verwendet. Die Druckschlauchsensoren sind vorzugsweise räumlich voneinander beabstandet angeordnet. Bei einer Anordnung umfassend zwei Druckschlauchsensoren handelt es sich insbesondere um ein System mit zwei wohldefinierten Kontaktschaltern (den Druckschlauchsensoren). Die Druckschlauchsensoren sind vorzugsweise in einer (insbesondere vorderen) Knautschzone des Kraftfahrzeugs angeordnet. Damit kann die Mindestgröße eines Kollisionsobjekts und/oder die Eigengeschwindigkeit des Kraftfahrzeugs bei der Kollision ermittelt werden.
Das beschriebene Verfahren umfasst insbesondere die Verfahrensschritte a) bis c), die vorzugsweise in der angegebenen Reihenfolge durchgeführt werden.
In Schritt a) des beschriebenen Verfahrens werden jeweilige Signale von mindestens zwei Druckschlauchsensoren empfangen.
Die Druckschlauchsensoren weisen vorzugsweise jeweils einen mit Luft gefüllten Schlauch (vorzugsweise aus einem Material umfassend Silikon) auf, der an einem Ende, vorzugsweise an beiden Enden, mit einem Drucksensor abgeschlossen ist. Im Folgenden wird beispielhaft davon ausgegangen, dass zwei Drucksensoren pro Druckschlauchsensor vorgesehen sind. Mit den Drucksensoren können Daten aufgenommen werden, aus denen auf einen Aufprall auf den Schlauch geschlossen werden kann. Über eine entsprechende Elektronik kann aus diesen Daten insbesondere ein Signal des Druckschlauchsensors erzeugt werden. Das Signal kann dabei insbesondere die Tatsache indizieren, dass ein Aufprall mit dem Druckschlauchsensor erfasst wurde. Der Zeitpunkt der Ausgabe des Signals kann den Zeitpunkt des Aufpralls (ggf. um eine Verarbeitungszeit verzögert) angeben. Alternativ kann das Signal auch kontinuierlich ausgegeben werden und bei einem erfassten Aufprall in vorgegebener Weise verändert werden.
Die Signale der mindestens zwei Druckschlauchsensoren werden vorzugsweise von einem Steuergerät empfangen, das zur Durchführung des beschriebenen Verfahrens bestimmt und eingerichtet ist.
In Schritt b) des beschriebenen Verfahrens wird eine Mindestgröße eines Kollisionsobjekts und/oder eine Eigengeschwindigkeit des Kraftfahrzeugs aus den gemäß Schritt a) empfangenen Signalen bestimmt.
Beim Aufprall auf ein Kollisionsobjekt werden die mindestens zwei Druckschlauchsensoren deformiert. Daraus kann eine Mindestgröße für das Kollisionsobjekt und/oder die Eigengeschwindigkeit des Kraftfahrzeugs bei der Kollision ermittelt werden.

Mit der erhaltenen Mindestgröße des Kollisionsobjekts und/oder mit der erhaltenen Eigengeschwindigkeit des Kraftfahrzeugs bei der Kollision kann beispielsweise die Sensitivität eines Fußgängerschutz-Algorithmus beeinflusst werden. Insbesondere dazu wird in Schritt c) des beschriebenen Verfahrens das Auslösesignal für die mindestens eine Sicherheitsfunktion in Abhängigkeit von mindestens einem der in Schritt b) bestimmten Parameter ausgegeben.

Bei der mindestens einen Sicherheitsfunktion kann es sich beispielsweise um eine aktive Motorhaube, einen Außenairbag, einen Airbag, einen Gurtstraffer oder einen Eingriff in die Steuerung des Kraftfahrzeugs (beispielsweise durch eine automatische Notbremsung und/oder ein automatisch eingeleitetes Ausweichmanöver) handeln. Vorzugsweise umfasst das Kraftfahrzeug eine Mehrzahl von Sicherheitsfunktionen. Die mindestens eine Sicherheitsfunktion kann insbesondere durch ein Auslösesignal ausgelöst werden, welches vorzugsweise insbesondere von dem Steuergerät ausgegeben wird. Durch Schritt c) des beschriebenen Verfahrens wird der in Schritt b) ausgegebene Parameter beim Auslösen der mindestens einen Sicherheitsfunktion berücksichtigt. So kann der Zeitpunkt und/oder die Art der Auslösung der mindestens einen Sicherheitsfunktion in Abhängigkeit des Parameters bestimmt werden. Auch kann bestimmt werden, ob die mindestens eine Sicherheitsfunktion überhaupt auszulösen ist. Bei mehreren Sicherheitsfunktionen kann zudem eine Auswahl an auszulösenden Sicherheitsfunktionen getroffen werden und/oder entschieden werden, in welcher Reihenfolge diese auszulösen sind.

Bei dem mindestens einen in Schritt c) ausgegebenen Parameter kann es sich insbesondere um die Mindestgröße des Kollisionsobjekts (bzw. um die Information, dass ein Kollisionsobjekt die Mindestgröße erreicht) und um die Eigengeschwindigkeit des Kraftfahrzeugs bei der Kollision handeln.

Die ermittelten Merkmale, also insbesondere die Mindestgröße des Kollisionsobjekts und/oder die Eigengeschwindigkeit des Kraftfahrzeugs, können insbesondere zur Ermittlung einer Ansteuerung der Sicherheitsfunktionen (also insbesondere von Rückhaltemitteln für den Fußgängerschutz) verwendet werden. Die genannten ermittelten Merkmale stellen zentrale Parameter für die Unterscheidung von Fußgängercrashs dar und können daher zur Ermittlung der Ansteuerung der entsprechenden Sicherheitsfunktionen eingesetzt werden. Beispielsweise kann man mit der Mindestgröße des Kollisionsobjekts die Sensitivität eines Fußgängerschutz-Algorithmus beeinflussen.

In einer bevorzugten Ausführungsform des Verfahrens repräsentieren die in Schritt a) empfangenen Signale der mindestens zwei Druckschlauchsensoren jeweils zumindest einen der folgenden Parameter:

- einen Auftreffzeitpunkt $t_1$, $t_2$ und
- einen Auftreffort $s_1$, $s_2$.

Damit, dass die empfangenen Signale die genannten Parameter Auftreffzeitpunkt ($t_1$, $t_2$) und Auftreffort ($s_1$, $s_2$) repräsentieren, ist insbesondere gemeint, das in den empfangenen Signalen Informationen enthalten sind, aus denen die genannten Parameter ermittelbar sind. Vorzugsweise werden in Schritt a) Druckverläufe hinsichtlich der von den Druckschlauchsensoren empfangen. In einem Steuergerät (bevorzugt in dem Steuergerät in dem auch die weiteren Verfahrensschritte ausgeführt werden) ist es dann möglich aus diesen Druckverläufen einen Auftreffzeitpunkt ($t_1$, $t_2$) und einen Auftreffort ($s_1$, $s_2$) zu berechnen.

Beim Aufprall auf ein Hindernis werden (zum Zeitpunkt $t_1$) der erste Druckschlauch und (zum Zeitpunkt $t_2$) der zweite Druckschlauch deformiert. Je nach Anordnung der Druckschlauchsensoren kann der Zeitpunkt $t_1$ vor oder nach dem Zeitpunkt $t_2$ liegen oder auch mit diesem zusammenfallen. Beide Deformationen führen zu einem unmittelbaren Druckanstieg und damit Drucksignal an den die jeweiligen Druckschläuche abschließenden Drucksensoren. Die jeweiligen Zeitpunkte $t_1$ und $t_2$ können im Steuergerät beispielsweise durch Schwellwertüberschreitungen eines jeweils ersten Drucksensors des jeweiligen Druckschlauchsensors detektiert werden.

Unter dem Auftreffzeitpunkt $t_1$ bzw. $t_2$ ist der Zeitpunkt zu verstehen, zu dem ein Aufprall mit dem ersten bzw. zweiten Druckschlauchsensor detektiert wird. Der Auftreffort $s_1$ bzw. $s_2$ ist der Ort, an dem der Aufprall mit dem ersten bzw. zweiten Druckschlauchsensor erfasst wurde. $s_1$ und $s_2$ sind vorzugsweise entlang der jeweiligen Druckschlauchsensoren definiert. So können $s_1$ und $s_2$ beispielsweise den Abstand zwischen dem Ort des Auftreffens und einer Mitte des Druckschlauchs angeben.

In einer weiteren bevorzugten Ausführungsform des Verfahrens werden in Schritt a) jeweilige Signale von mindestens zwei Druckschlauchsensoren empfangen, die zumindest in Fahrtrichtung des Kraftfahrzeugs beabstandet voneinander angeordnet sind.

Diese Anordnung ist besonders zur Bestimmung der Eigengeschwindigkeit des Kraftfahrzeugs in Schritt b) bevorzugt.

In einer weiteren bevorzugten Ausführungsform des Verfahrens werden in Schritt a) jeweilige Signale von mindestens zwei Druckschlauchsensoren empfangen, die zumindest quer zu einer Fahrtrichtung des Kraftfahrzeugs beabstandet voneinander angeordnet sind.

Die beiden Druckschlauchsensoren sind vorzugsweise in einer Hochrichtung (also gemäß der Richtung der Gravitation) und damit quer zur Fahrtrichtung voneinander beabstandet. Diese Anordnung ist besonders zur Bestimmung der Mindestgröße des Kollisionsobjekts in Schritt b) bevorzugt.

Vorzugsweise sind die beiden Druckschlauchsensoren sowohl in der Fahrtrichtung als auch quer dazu (insbesondere in der Hochrichtung) voneinander beabstandet. In dem Fall kann in Schritt b) insbesondere sowohl die Mindestgröße des Kollisionsobjekts als auch die Eigengeschwindigkeit des Kraftfahrzeugs bei der Kollision bestimmt werden.

Unter der Fahrtrichtung ist hier die Richtung zu verstehen, in die sich das Kraftfahrzeug bei üblicher Vorwärtsfahrt bewegt. Ein frontaler Aufprall kann durch den in Fahrtrichtung weiter vorne liegenden Druckschlauchsensor zuerst und erst mit Verzögerung auch mit dem anderen Druckschlauchsensor erfasst werden. Durch die zeitliche Differenz, mit der die beiden Druckschlauchsensoren den Aufprall detektieren, kann insbesondere eine Aufprallgeschwindigkeit bestimmt werden.

Aus der Zeitdifferenz $\Delta t = t_2 - t_1$ zwischen den Zeitpunkten $t_2$ (Druckanstieg im zweiten Druckschlauch) und $t_1$ (Druckanstieg im ersten Druckschlauch) und dem in Fahrtrichtung longitudinalen Abstand d zwischen beiden Druckschlauchsensoren kann die Aufprallgeschwindigkeit $v_{impact}$ direkt ermittelt werden zu

$$v_{impact} = d/\Delta t. \qquad\qquad (1)$$

Um beide Druckschlauchsensoren für den Fußgängerschutz besonders gut nutzen zu können, sind die Druckschlauchsensoren vorzugsweise besonders weit vorn im Kraftfahrzeug (insbesondere vor härteren Crashstrukturen wie z. B. Crashboxen) angeordnet. Die Erfassung eines Kollisionsobjekts kann dann besonders gut erfolgen, wenn die Höhe des Massenschwerpunktes (CoM) des Kollisionsobjekts nicht näher an der Höhe des ersten Druckschlauchsensors als an der Höhe des zweiten Druckschlauchsensors liegt. Mit der Höhe der Druckschlauchsensoren ist hier eine Position in der Hochrichtung gemeint. Befindet sich der Massenschwerpunkt des Kollisionsobjekts in einer anderen als der angegebenen Höhe, kann die Deformation des zweiten Druckschlauchsensors für eine sichere Erkennung unzureichend klein sein. Da ein für den Fußgängerschutz relevantes Kollisionsobjekt in der Regel sehr leicht im Vergleich zu einem Kraftfahrzeug ist, wird das Kollisionsobjekt am Erstkontaktpunkt abgebremst. Der Massenschwerpunkt des Kollisionsobjekts wird sich aber mit annähernd gleichbleibender Geschwindigkeit weiterbewegen. Diese Geschwindigkeit entspricht der Aufprallgeschwindigkeit $v_{PTS1}(t_1)$ auf den Erstkontaktpunkt

$$v_{CoM,x}(t_2) \approx v_{CoM,x}(t_1) = v_{PTS1}(t_1). \qquad\qquad (2)$$

Dadurch wird eine Drehbewegung des Kollisionsobjekts einsetzen. Durch diese Drehung wird sich die Geschwindigkeit des oberen Endes des Kollisionsobjekts erhöhen. Die Geschwindigkeit des Auftreffpunktes des Kollisionsobjekts auf Höhe des zweiten Druckschlauchsensors $z_{PTS2}$ ist damit abhängig von einem geometrischen Faktor $f_G$, der das Verhältnis zwischen den Auftreffgeschwindigkeiten am ersten Druckschlauchsensor $v_{PTS1}$ und am zweiten Druckschlauchsensor $v_{PTS2}$ beschreibt:

$$v_{PTS2}(t_2) \approx f_G \cdot v_{CoM,x}(t_1) = f_G \cdot v_{PTS1}(t_1) \qquad\qquad (3)$$

Der Faktor $f_G$ ergibt sich aus der Stoßfängergeometrie im Verhältnis zu den für den Fußgängerschutz relevanten Impaktormaßen:

$$f_G = [z_{PTS2} - z_{PTS1}]/[z_{CoM} - z_{PTS1}] \qquad\qquad (4)$$

Dieser Faktor wird vorzugsweise für jedes Kraftfahrzeug individuell bestimmt.

Die beschriebenen geometrischen Überlegungen zeigen, dass die aus den Auftreffzeitpunkten $t_1$ und $t_2$ gemäß Gleichung (1) bestimmte Aufprallgeschwindigkeit tatsächlich die Aufprallgeschwindigkeit auf den zweiten Druckschlauchsensor $v_{PTS2}(t_2)$ ist:

$$v_{PTS2}(t_2) \approx d/\Delta t \qquad\qquad (5)$$

Für einen Fußgängercrash, bei dem der Fußgänger relativ zum Kraftfahrzeug als stehend angenommen werden kann, ist die Aufprallgeschwindigkeit auf den Erstkontaktpunkt $v_{PTS1}(t_1)$ gleich der Fahrzeugeigengeschwindigkeit $v_{ego}$.

Damit erhält man aus der Aufprallgeschwindigkeit die Fahrzeugeigengeschwindigkeit nach

$$v_{PTS2}(t_2) \approx f_G \cdot v_{PTS1}(t_1) = f_G \cdot v_{ego} \tag{6}$$

bzw. kann aus der gemäß Gleichung (5) ermittelten Aufprallgeschwindigkeit die Eigengeschwindigkeit $v_{ego}$ ermitteln. Dabei kann für eine weite Spanne von Fußgängerobjekten ein ähnlicher Faktor $f_G$ angesetzt werden.

In einer weiteren bevorzugten Ausführungsform des Verfahrens wird in Schritt b) zumindest die Eigengeschwindigkeit des Kraftfahrzeugs bestimmt, wobei das Auslösesignal für die mindestens eine Sicherheitsfunktion in Schritt c) in Abhängigkeit eines Vergleichs zwischen der so bestimmten Eigengeschwindigkeit des Kraftfahrzeugs mit einem Vergleichswert für die Eigengeschwindigkeit des Kraftfahrzeugs ausgegeben wird.

Die Bestimmung der Eigengeschwindigkeit des Kraftfahrzeugs bei der Kollision kann einen Abgleich mit der Fahrzeugeigengeschwindigkeit ermöglichen, die im Fußgängerschutz verwendet werden kann. Da bei einem Fußgängeraufprall die Kollisionsgeschwindigkeit und die Fahrzeugeigengeschwindigkeit sehr ähnlich sein müssen, können durch einen solchen Abgleich andere Szenarien teilweise ausgeschlossen werden (z. B. Fahrzeug-Fahrzeug-Crashs oder Kollisionen mit schnellen Nichtauslöseobjekten wie beispielsweise einem Fußball).

Die ermittelte Eigengeschwindigkeit des Kraftfahrzeugs bei der Kollision kann anstelle einer anderweitig verfügbaren Information über die Fahrzeugeigengeschwindigkeit (die beispielsweise in einem CAN verfügbar ist) verwendet werden. Alternativ kann der Fußgängerschutz-Algorithmus bei Abweichungen dieser Fahrzeugeigengeschwindigkeiten in einen robusteren Zustand versetzt werden, da ein Fußgänger-Aufprall unwahrscheinlicher ist. Die Sensivierung (Erhöhung der Sensitivität) oder Robustierung (Erhöhung der Robustheit) des Algorithmus selbst kann durch Absenkung oder Anhebung von Auslöseschwellen in existierenden Auslöselogiken oder aber durch Umschaltung auf andere, sensitivere oder robustere Auslöselogiken erfolgen. Dieses Vorgehen kann auch als ein "Pfadkonzept" bezeichnet werden.

In einer weiteren bevorzugten Ausführungsform des Verfahrens wird das Auslösesignal in Schritt c) ausgegeben, wenn ein Kontakt eines Kollisionsobjekts mit mindestens zwei der Druckschlauchsensoren erkannt wird.

Die Deformation der Druckschlauchsensoren führt jeweils zu einem unmittelbaren Druckanstieg und damit zu einem Drucksignal p an den die Druckschläuche abschließenden Drucksensoren. Zur Erkennung der Mindestgröße des Kollisionsobjekts kann beispielsweise für beide Druckschlauchsensoren eine Druckschwelle angesetzt werden. Wenn für beide Druckschlauchsensoren die Druckschwelle überschritten wird, hat das Kollisionsobjekt eine Mindestgröße, welche dem vertikalen Abstand der beiden Druckschlauchsensoren entspricht. Der vertikale Abstand ist in der Hochrichtung, also bei üblicher Orientierung des Kraftfahrzeugs von oben nach unten bzw. von unten nach oben gemessen.

Da die Druckstärke an beiden Druckschlauchsensoren geschwindigkeitsabhängig sein kann, kann auch die zur Erkennung verwendete Druckschwelle abhängig von der Fahrzeugeigengeschwindigkeit (z.B. über CAN) gewählt werden. Die Erkennung kann auch als Funktion der Druckstärke an beiden Druckschlauchsensoren ausgestaltet werden, wobei ein stärkeres Drucksignal an beiden Druckschlauchsensoren sowohl auf ein größeres, als auch auf ein schwereres Objekt hindeuten kann. Mehrere Stufen der Beeinflussung, oder eine kontinuierlich stärkere Beeinflussung sind damit möglich.

In einer weiteren bevorzugten Ausführungsform des Verfahrens umfassen die in Schritt a) empfangenen jeweiligen Signale der Druckschlauchsensoren zumindest eine jeweilige Druckstärke, aus denen eine jeweilige Aufprallgeschwindigkeit eines Kollisionsobjekts auf den entsprechenden Druckschlauchsensor ermittelt wird, wobei die Mindestgröße in Schritt b) zumindest in Abhängigkeit einer so ermittelten jeweiligen Aufprallgeschwindigkeit bestimmt wird.

Insbesondere können in dieser Ausführungsform Größen zur Ermittlung der Mindestgröße in Abhängigkeit von der ermittelten jeweiligen Aufprallgeschwindigkeit bestimmt werden. Aus diesen Größen kann dann die Mindestgröße ermittelt werden.

Als ein weiterer Aspekt wird ein Steuergerät für ein Kraftfahrzeug vorgestellt, welches zur Durchführung des beschriebenen Verfahrens eingerichtet ist. Die weiter vorne für das Verfahren beschriebenen besonderen Vorteile und Ausgestaltungsmerkmale sind auf das Steuergerät anwendbar und übertragbar.

Weiterhin wird ein Computerprogramm vorgestellt, welches eingerichtet ist, alle Schritte des beschriebenen Verfahrens auszuführen. Zudem wird ein maschinenlesbares Speichermedium vorgestellt, auf dem das beschriebene Computerprogramm gespeichert ist. Die weiter vorne für das Verfahren und das Steuergerät beschriebenen besonderen Vorteile und Ausgestaltungsmerkmale sind auf das Computerprogramm und das maschinenlesbare Speichermedium anwendbar und übertragbar.

Weitere Einzelheiten der Erfindung und ein Ausführungsbeispiel, auf welches die Erfindung jedoch nicht beschränkt ist, werden anhand der Zeichnungen näher erläutert. Es zeigen schematisch:

Fig. 1:     eine Darstellung eines Kraftfahrzeugs mit zwei Druckschlauchsensoren, das zur Durchführung des beschriebenen Verfahrens eingerichtet ist,

Fig. 2:     eine seitliche Querschnittdarstellung des Kraftfahrzeugs aus Fig. 1,

Fig. 3: ein zeitlicher Verlauf von Drücken in den Druckschlauchsensoren des Kraftfahrzeugs aus den Fig. 1 und 2,

Fig. 4: eine vergrößerte Darstellung der Druckschlauchsensoren des Kraftfahrzeugs aus den Fig. 1 und 2,

Fig. 5: eine seitliche Darstellung einer Kollision des Kraftfahrzeugs aus den Fig. 1, 2 und 4 mit einem Kollisionsobjekt, und

Fig. 6: eine Darstellung des beschriebenen Verfahrens.

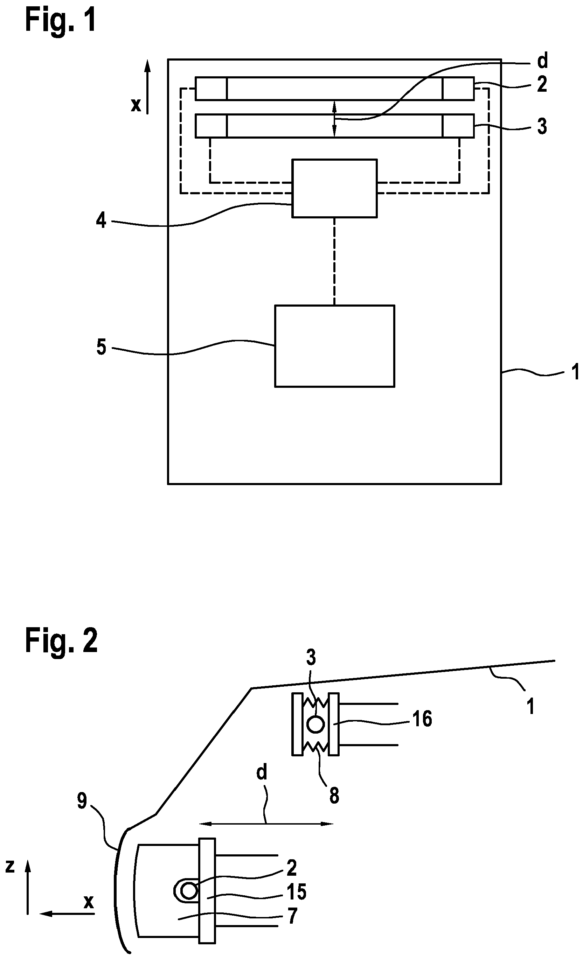

In Fig. 1 ist ein Kraftfahrzeug 1 mit einem ersten Druckschlauchsensor 2 und einem zweiten Druckschlauchsensor 3 gezeigt. Beide Druckschlauchsensoren 2 und 3 sind an ein Steuergerät 4 angebunden. Über das Steuergerät 4 kann eine Sicherheitsfunktion 5 ausgelöst werden. In Fahrtrichtung x (von unten nach oben in dieser Darstellung) sind die beiden Druckschlauchsensoren 2 und 3 um einen Abstand d voneinander beabstandet angeordnet.

Fig. 2 zeigt eine mögliche Realisierung eines 2-PTS-Systems in dem Kraftfahrzeug 1 aus Fig. 1. Der erste Druckschlauchsensor 2 ist dabei konventionell in einem Stoßfänger 9 in einer Nut eines Absorptionsschaums 7, der auf einem Querträger 15 aufliegt, verbaut. Der zweite Druckschlauchsensor 3 ist in diesem Beispiel auf einem Kühlerquerträger 16 angebracht. Als ein Absorptionselement 8 ("energy absorber") ist hierbei nicht ein Schaum, sondern ein mechanisches Element vorgesehen. Die konkrete Ausgestaltung ist dabei nicht entscheidend. Die Aufgabe des Absorptionselements 8 besteht lediglich darin, die Kraft kontrolliert auf den zweiten Druckschlauchsensor 3 einzukoppeln und ihn mechanisch zu schützen. Zumindest für die Bestimmung einer Mindestgröße eines Kollisionsobjekts müssen die Druckschlauchsensoren 2 und 3 nicht notwendigerweise in der gleichen Entfernung vom Stoßfänger 9 (in der Darstellung in der Richtung von links nach rechts) angeordnet sein. Zur Bestimmung der Eigengeschwindigkeit des Kraftfahrzeugs 1 ist es hingegen bevorzugt, dass die Druckschlauchsensoren 2 und 3 auch in Fahrtrichtung (wie eingezeichnet um den Abstand d) beabstandet angeordnet sind. In einer Richtung quer zur Fahrtrichtung x, also insbesondere in einer Hochrichtung z, sind die Druckschlauchsensoren 2, 3 voneinander beabstandet.

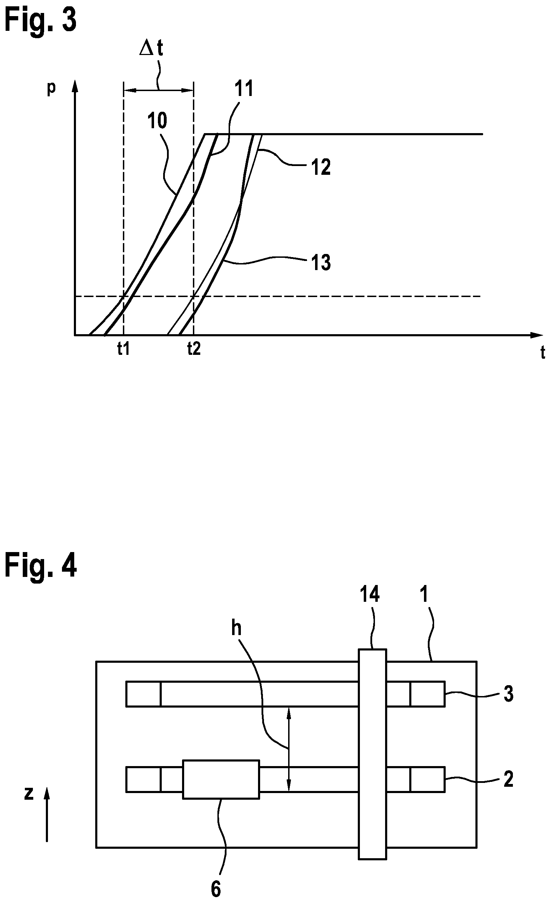

In Fig. 3 ist ein zeitlicher Verlauf von Drücken p in den Druckschlauchsensoren 2 und 3 des Kraftfahrzeugs 1 aus den Fig. 1 und 2 gezeigt. Ein erstes Drucksignal 10 ist mit einem linken Drucksensor des ersten Druckschlauchsensors 2 und ein zweites Drucksignal 11 mit einem rechten Drucksensor des ersten Druckschlauchsensors 2 aufgenommen. Ein drittes Drucksignal 12 ist mit einem linken Drucksensor des zweiten Druckschlauchsensors 3 und ein viertes Drucksignal 13 mit einem rechten Drucksensor des zweiten Druckschlauchsensors 3 aufgenommen. Zu erkennen ist insbesondere, dass der Druckanstieg im zweiten Druckschlauchsensor 3 später eintritt als im ersten Druckschlauchsensor 2. Die Auftreffzeitpunkte $t_1$ und $t_2$ sind entsprechend des Abstandes d der Druckschlauchsensoren 2 und 3 um eine Zeitdifferenz $\Delta t$ verschieden. Weiterhin ist zu erkennen, dass der Druckanstieg in den jeweils linken Drucksensoren früher eintritt. Das liegt daran, dass der Auftreffort in diesem Beispiel links von der Mitte des Kraftfahrzeugs 1 liegt und die Druckwellen entsprechend die linken Drucksensoren früher erreichen. Es handelt sich in diesem Beispiel also um einen linksseitigen Crash.

Fig. 4 zeigt schematisch die Anordnung der beiden Druckschlauchsensoren 2 und 3 des Kraftfahrzeugs 1 aus den Fig. 1 und 2 in einer frontalen Querschnittsdarstellung. Die Fahrtrichtung x zeigt in dieser Darstellung aus der Zeichenebene heraus. Eingezeichnet sind ein kleines Kollisionsobjekt 6 und ein großes Kollisionsobjekt 14. Das kleine Kollisionsobjekt 6 ist kleiner als die Mindestgröße, die erforderlich ist, um beide Druckschlauchsensoren 2 und 3 zu treffen. Bei dem kleinen Kollisionsobjekt 6 kann es sich beispielsweise um einen Fußball handeln. Das große Kollisionsobjekt 14 ist größer als die Mindestgröße und kann daher beide Druckschlauchsensoren 2 und 3 gleichzeitig treffen. Bei dem großen Kollisionsobjekt 14 kann es sich beispielsweise um einen Fußgänger bzw. um dessen Beine handeln. Zu erkennen ist, dass die Druckschlauchsensoren 2, 3 in der Hochrichtung z um einen Abstand h voneinander beabstandet angeordnet sind.

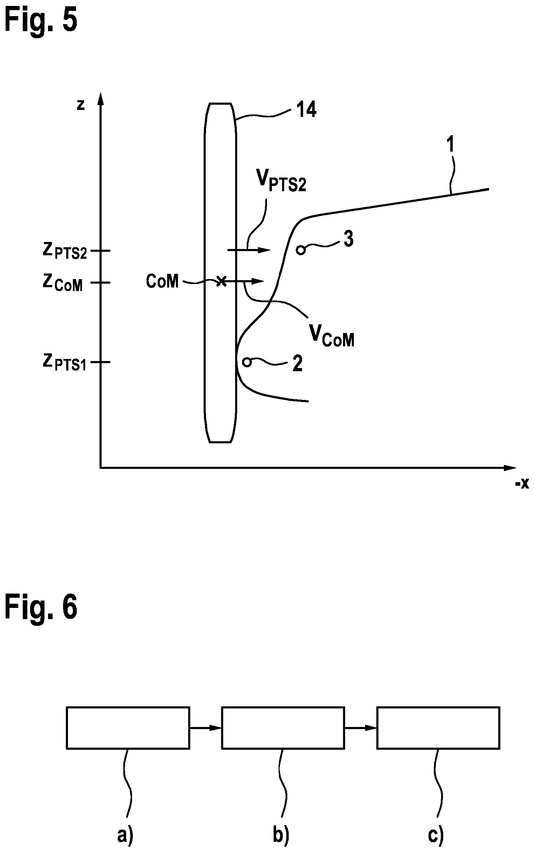

Fig. 5 zeigt eine seitliche Querschnittdarstellung des Kraftfahrzeugs 1 aus den Fig. 1, 2 und 4. Dabei ist das Kraftfahrzeug 1 mit den Druckschlauchsensoren 2 und 3 zu erkennen. Dazu sind eine z-Achse (für die Hochrichtung z) und eine x-Achse (für die Fahrtrichtung x) eingezeichnet. Die x-Achse weist hier in negative x-Richtung und ist daher als "-x" eingezeichnet. Der erste Druckschlauchsensor 2 ist in einer Höhe $z_{PTS1}$ unterhalb des zweiten Druckschlauchsensors 3 in einer Höhe von $z_{PTS2}$ angeordnet. Vor dem Kraftfahrzeug 1 ist das große Kollisionsobjekt 14 aus Fig. 4 eingezeichnet. Der Massenschwerpunkt CoM des großen Kollisionsobjekts 14 befindet sich in einer Höhe $z_{CoM}$ zwischen $z_{PTS1}$ und $z_{PTS2}$. Angedeutet ist zudem, dass sich der Massenschwerpunkt des großen Kollisionsobjekts 14 mit einer Geschwindigkeit $v_{CoM}$ bewegt. $v_{PTS2}$ ist die Geschwindigkeit des Bereiches des großen Kollisionsobjekts 14, der auf den zweiten Druckschlauchsensor 3 auftrifft.

Fig. 6 ist eine schematische Darstellung eines Verfahrens zur Erzeugung eines Auslösesignals zum Auslösen mindestens einer Sicherheitsfunktion 5 eines Kraftfahrzeugs 1, umfassend die folgenden Verfahrensschritte:

a) Empfangen von jeweiligen Signalen von mindestens zwei Druckschlauchsensoren 2,3,

b) Bestimmen einer Mindestgröße eines Kollisionsobjekts 14 und/oder einer Eigengeschwindigkeit des Kraftfahrzeugs 1 aus den gemäß Schritt a) empfangenen Signalen,
c) Ausgeben des Auslösesignals für die mindestens eine Sicherheitsfunktion 5 in Abhängigkeit von mindestens einem der in Schritt b) bestimmten Parameter.

**Patentansprüche**

1. Verfahren zur Erzeugung eines Auslösesignals zum Auslösen mindestens einer Sicherheitsfunktion (5) eines Kraftfahrzeugs (1), umfassend zumindest die folgenden Verfahrensschritte:

   a) Empfangen von jeweiligen Signalen von mindestens zwei Druckschlauchsensoren (2,3),
   b) Bestimmen einer Mindestgröße eines Kollisionsobjekts (14) und/oder einer Eigengeschwindigkeit des Kraftfahrzeugs (1) aus den gemäß Schritt a) empfangenen Signalen,
   c) Ausgeben des Auslösesignals für die mindestens eine Sicherheitsfunktion (5) in Abhängigkeit von mindestens einem der in Schritt b) bestimmten Parameter.

2. Verfahren nach Anspruch 1, wobei die in Schritt a) empfangenen Signale der mindestens zwei Druckschlauchsensoren (2,3) jeweils zumindest einen der folgenden Parameter repräsentiert:

   - einen Auftreffzeitpunkt ($t_1$, $t_2$) und
   - einen Auftreffort ($s_1$, $s_2$).

3. Verfahren nach einem der vorhergehenden Ansprüche, wobei in Schritt a) jeweilige Signale von mindestens zwei Druckschlauchsensoren (2,3) empfangen werden, die zumindest in Fahrtrichtung (x) des Kraftfahrzeugs (1) beabstandet voneinander angeordnet sind.

4. Verfahren nach einem der vorhergehenden Ansprüche, wobei in Schritt a) jeweilige Signale von mindestens zwei Druckschlauchsensoren (2,3) empfangen werden, die zumindest quer zu einer Fahrtrichtung (x) des Kraftfahrzeugs (1), insbesondere in Hochrichtung (z), beabstandet voneinander angeordnet sind.

5. Verfahren nach einem der vorhergehenden Ansprüche, wobei in Schritt b) zumindest die Eigengeschwindigkeit des Kraftfahrzeugs (1) bestimmt wird, und wobei das Auslösesignal für die mindestens eine Sicherheitsfunktion (5) in Schritt c) in Abhängigkeit eines Vergleichs zwischen der so bestimmten Eigengeschwindigkeit des Kraftfahrzeugs (1) mit einem Vergleichswert für die Eigengeschwindigkeit des Kraftfahrzeugs (1) ausgegeben wird.

6. Verfahren nach einem der vorhergehenden Ansprüche, wobei das Auslösesignal in Schritt c) ausgegeben wird, wenn ein Kontakt eines Kollisionsobjekts (14) mit mindestens zwei der Druckschlauchsensoren (2, 3) erkannt wird.

7. Verfahren nach einem der vorhergehenden Ansprüche, wobei die in Schritt a) empfangenen jeweiligen Signale der Druckschlauchsensoren (2, 3) zumindest eine jeweilige Druckstärke umfassen, aus denen eine jeweilige Aufprallgeschwindigkeit eines Kollisionsobjekts (14) auf den entsprechenden Druckschlauchsensor (2, 3) ermittelt wird, und wobei die Mindestgröße des Kollisionsobjekts (14) in Schritt b) zumindest in Abhängigkeit einer so ermittelten jeweiligen Aufprallgeschwindigkeit bestimmt wird.

8. Steuergerät (4) für ein Kraftfahrzeug (1), umfassend Mittel zur Ausführung des Verfahrens nach einem der vorhergehenden Ansprüche.

9. Computerprogramm, umfassend Befehle, die bei der Ausführung des Programms durch das Steuergerät nach Anspruch 8 dieses veranlassen, das Verfahren nach einem der Ansprüche 1-7 auszuführen.

10. Maschinenlesbares Speichermedium, auf dem das Computerprogramm nach Anspruch 9 gespeichert ist.

**Claims**

1. Method for generating a trigger signal for triggering at least one safety function (5) of a motor vehicle (1), comprising at least the following method steps:

a) receiving respective signals from at least two pressure tube sensors (2, 3),

b) determining a minimum size of a collision object (14) and/or the motor vehicle's (1) own speed from the signals received in step a),

c) outputting the trigger signal for the at least one safety function (5) depending on at least one parameter determined in step b).

2. Method according to Claim 1, wherein the signals from the at least two pressure tube sensors (2, 3) received in step a) each represent at least one of the following parameters:

- an impact time ($t_1$, $t_2$) and
- an impact location ($s_1$, $s_2$).

3. Method according to either of the preceding claims, wherein, in step a), respective signals are received from at least two pressure tube sensors (2, 3) that are arranged at a distance from one another at least in the direction of travel (x) of the motor vehicle (1).

4. Method according to one of the preceding claims, wherein, in step a), respective signals are received from at least two pressure tube sensors (2, 3) that are arranged at a distance from one another at least transverse to a direction of travel (x) of the motor vehicle (1), in particular in the height direction (z).

5. Method according to one of the preceding claims, wherein, in step b), at least the motor vehicle's (1) own speed is determined, and wherein the trigger signal for the at least one safety function (5) is output in step c) depending on a comparison between the motor vehicle's (1) own speed determined in this way and a comparison value for the motor vehicle's (1) own speed.

6. Method according to one of the preceding claims, wherein the trigger signal is output in step c) when contact of a collision object (14) with at least two of the pressure tube sensors (2, 3) is detected.

7. Method according to one of the preceding claims, wherein the respective signals from the pressure tube sensors (2, 3) received in step a) comprise at least a respective pressure strength from which a respective impact speed of a collision object (14) on the corresponding pressure tube sensor (2, 3) is determined, and wherein the minimum size of the collision object (14) is determined in step b) at least depending on a respective impact speed determined in this way.

8. Controller (4) for a motor vehicle (1), comprising means for carrying out the method according to one of the preceding claims.

9. Computer program comprising commands that, when the program is executed by the controller according to Claim 8, prompt said controller to carry out the method according to one of Claims 1 to 7.

10. Machine-readable storage medium on which the computer program according to Claim 9 is stored.

**Revendications**

1. Procédé permettant de produire un signal de déclenchement servant à déclencher au moins une fonction de sécurité (5) d'un véhicule automobile (1), comprenant au moins les étapes de procédé suivantes consistant à :

a) recevoir des signaux respectifs d'au moins deux capteurs de tuyau de pression (2, 3),

b) déterminer une taille minimale d'un objet de collision (14) et/ou une vitesse propre du véhicule automobile (1) à partir des signaux reçus selon l'étape a),

c) sortir le signal de déclenchement pour ladite au moins une fonction de sécurité (5) en fonction d'au moins un paramètre déterminé à l'étape b).

2. Procédé selon la revendication 1, dans lequel les signaux reçus à l'étape a) des au moins deux capteurs de tuyau de pression (2, 3) représentent respectivement au moins l'un des paramètres suivants :

- un temps d'impact ($t_1$, $t_2$), et

- un lieu d'impact ($s_1$, $s_2$).

3. Procédé selon l'une quelconque des revendications précédentes, dans lequel à l'étape a), des signaux respectifs sont reçus d'au moins deux capteurs de tuyau de pression (2, 3) qui sont disposés à distance les uns des autres au moins dans le sens de la marche (x) du véhicule automobile (1).

4. Procédé selon l'une quelconque des revendications précédentes, dans lequel à l'étape a), des signaux respectifs sont reçus d'au moins deux capteurs de tuyau de pression (2, 3) qui sont disposés à distance les uns des autres au moins transversalement à un sens de la marche (x) du véhicule automobile (1), en particulier dans la direction verticale (z).

5. Procédé selon l'une quelconque des revendications précédentes, dans lequel à l'étape b), au moins la vitesse propre du véhicule automobile (1) est déterminée, et dans lequel le signal de déclenchement pour ladite au moins une fonction de sécurité (5) est sorti à l'étape c) en fonction d'une comparaison entre la vitesse propre du véhicule automobile (1) ainsi déterminée et une valeur de comparaison pour la vitesse propre du véhicule automobile (1).

6. Procédé selon l'une quelconque des revendications précédentes, dans lequel le signal de déclenchement est sorti à l'étape c) si un contact d'un objet de collision (14) avec au moins deux des capteurs de tuyau de pression (2, 3) est reconnu.

7. Procédé selon l'une quelconque des revendications précédentes, dans lequel les signaux respectifs reçus à l'étape a) des capteurs de tuyau de pression (2, 3) comprennent au moins une intensité de pression respective à partir de laquelle une vitesse d'impact respective d'un objet de collision (14) sur le capteur de tuyau de pression correspondant (2, 3) est établie, et dans lequel la taille minimale de l'objet de collision (14) est déterminée à l'étape b) au moins en fonction d'une vitesse d'impact respective ainsi établie.

8. Appareil de commande (4) pour un véhicule automobile (1), comprenant des moyens pour exécuter le procédé selon l'une quelconque des revendications précédentes.

9. Programme informatique comprenant des commandes qui, lors de l'exécution du programme par l'appareil de commande selon la revendication 8, font que celui-ci exécute le procédé selon l'une quelconque des revendications 1 à 7.

10. Support de stockage lisible par machine sur lequel est stocké le programme informatique selon la revendication 9.

## Fig. 1

## Fig. 2

## Fig. 3

## Fig. 4

# Fig. 5

$z$

14

$V_{PTS2}$

1

$z_{PTS2}$

$z_{CoM}$

CoM

×

3

$V_{CoM}$

$z_{PTS1}$

2

-x

# Fig. 6

a)          b)          c)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10309081 A1
- US 2013079995 A1